# EUROPEAN PATENT SPECIFICATION

(11) **EP 4 423 634 B1**
(45) Date of publication and mention of the grant of the patent: **02.12.2026**
(21) Application number: 22893413.9
(22) Date of filing: 17.10.2022
(51) Int. Cl.: H04L 9/40, G06F 21/57, G06F 21/00

(54) **AN AUTOMATED API-BASED PORT AND VULNERABILITY SCANNER**
AUTOMATISIERTER API-BASIERTER PORT- UND ANFÄLLIGKEITSSCANNER
ANALYSEUR DE PORT ET DE VULNÉRABILITÉ AUTOMATISÉ FONDÉ SUR UNE API

(30) Priority: 09.11.2021 TR 202117485; 20.05.2022 TR 202208172
(43) Date of publication of application: 04.09.2024
(73) Proprietor: Istanbul Medipol Universitesi Teknoloji Transfer Ofisi Anonim Sirketi, 34810 Beykoz/Istanbul (TR)
(72) Inventor: ALHAJJ, Reda, 34810 stanbul (TR); MALKAWI, Malek, 34810 stanbul (TR)
(74) Representative: Simsek, Meliha Merve
(86) International application number: PCT/TR2022/051143
(87) International publication number: WO 2023/086057

(56) References cited:
- WO-A1-2018/084808
- CN-A- 111 488 577
- CN-A- 111 988 311
- CN-A- 113 221 124
- US-A1- 2012 144 493
- US-A1- 2021 306 341
- MALKAWI MALEK ET AL: "Automation of active reconnaissance phase an automated API-based port and vulnerability scanner", PROCEEDINGS OF THE 2021 IEEE/ACM INTERNATIONAL CONFERENCE ON ADVANCES IN SOCIAL NETWORKS ANALYSIS AND MINING, ASONAM 2021, VIRTUAL EVENT, 8 November 2021 (2021-11-08), pages 622 - 629, XP058782619, ISBN: 978-1-4503-9132-0, DOI: 10.1145/3487351.3492720
- VALEA OVIDIU ET AL: "Towards Pentesting Automation Using the Metasploit Framework", 2020 IEEE 16TH INTERNATIONAL CONFERENCE ON INTELLIGENT COMPUTER COMMUNICATION AND PROCESSING (ICCP), IEEE, 3 September 2020 (2020-09-03), pages 171 - 178, XP033865308, DOI: 10.1109/ICCP51029.2020.9266234
- ANONYMOUS: "Ping and NMAP as REST API - My lil web adobe", 5 February 2020 (2020-02-05), XP093214000, Retrieved from the Internet <URL:https://www.mka.in/wp/ping-and-nmap-as-web-service/> [retrieved on 20241010]

## Description

### Technical Field

This invention relates to an automation method for the active information-gathering phase that can be used during penetration testing and by system administrators. The method is an automated API-based IP and port scanner, service-version enumerator, and vulnerability detection system.

### Prior Art

The unprecedented growth in technology has increased the importance of the required information security that is still hard to be reached. Recently, network and web application attacks have occurred frequently, causing confidential data to be stolen by the available vulnerabilities in the systems and the most prominent is in the form of open ports. This causes the CIA (Confidentiality Integrity and Availability) Triad Model to break. The huge gap in the automation of penetration testing process and the lack of the available methods are the main technical problems that lead the inventor to pursue research in this field. Without such a method, it is really hard to accurately detect the possible threats and potential attacks against the system in short time.

Research towards automatic and comprehensive tools is still in its infancy and is almost nonexistent. Most of the previous works have been trying to discover and find the vulnerability by manual approaches. Besides its manual methodologies, they are only considering a specific kind of attacks. While a few studies focused only on determining the operating system of the target system, others, are trying to detect only specific vulnerability.

The current solutions present in the art depend on a variety of tools. For example, to be able to check a small or large scale network, a lot of tools should be used separately and independently to go over the used technologies and the devices. While a few studies focused only on gathering information regarding specific operating system or technology of the target system, others, are trying to detect only specific kind of vulnerability. One of the previous studies developed a command line application that locates and stores an organization's footprint and looks for sensitive information, such as data repositories, to enhance an organization's vulnerability assessment process. However, this kind of methods consume a long time to give a result. In another study a system that analyzes coarsely detailed security-related network data of a basic sort and visualizes security-related events of interest has been described. Additionally, the document "Towards pentesting automation using the metasploit framework." by Ovidiu Valea and 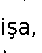 Ciprian Opria, published in 2020 IEEE 16th International Conference on Intelligent Computer Communication and Processing (ICCP), constitutes relevant prior art.

The methods proposed in the prior art are disadvantageous because these methods are using a lot of tools independently, this not only consumes a huge amount of time, but also, it becomes the reason behind losing valuable information that might be critical in terms of defining the possible security issues and the vulnerabilities in the systems.

In manual approaches, the process takes weeks to check all the devices and used technologies. According to one of the previous published works, performing a manual approach would take one minute per vulnerability. For example, our system was able to detect 42109 vulnerabilities only in five minutes for one of the test cases. According to these studies, the manual approach will take 42109 minutes to make the critical work that can be done in only five minutes in automated approach (our method). Attempting to enumerate the service-version and vulnerability information from all ports without making any optimization rule to enhance the performance of the operation is the most common mistake made by other researchers.

### Aim of the Invention

The purpose is to protect the CIA (Confidentiality, Integrity, and Availability) Triad, which is the core of information security with the wave of technological advancement. We aim to provide a generic and optimized approach for automating the process of active reconnaissance phase and penetration testing. Our technique is primarily focused on automating the port scanning and vulnerability assessment phases of reconnaissance, which are handled by Nmap's algorithms, Nmap Scripting Engines (NSEs), and "Vulscan" and "Vulners" modules. We offer a useful schema that will make penetration testers' and system administrators' life easier. Allowing them to scan and secure their networks more quickly.

### Brief Description of the Invention

The method of the invention is an automated API-based **IP** and port scanner, service-version enumerator, and vulnerability detection system.

This scheme is based on the Network Mapper (Nmap) algorithm to collect the information with high accuracy depending on the provided rules in our schema. Besides, the work has been implemented as a RESTful-API server, aiming at easy integration for real-life cases and allowing administrators to scan and secure their networks more quickly and easily. The effectiveness and efficiency of this technique has been proved by the various test cases applied considering different scenarios from the real world. The average time of scanning a server and detecting the vulnerabilities is 2.2 minutes. Regardless of the number of vulnerabilities, the increase in time for each open port is just about 12 seconds.

Compared to the prior art methods our suggested method will play an important role in system security by allowing companies and system administrators to scan their systems on a frequent and regular basis with the minimal resources they have. Furthermore, this allows for rapid updates to newly discovered software vulnerabilities. Our scanner is used to demonstrate how simple it is to scan a complicated enterprise-grade web application. At the same time, it has been implemented as API server which means it can be integration with any kind of systems irrespective of the used technologies or hardware. It can be entirely scalable and flexible to any system according to their demands and growth.

The method according to the invention can be used to scan any network or system in automated way to check frequently and regularly for any possible security issue, vulnerability or threat in the system. It can be used to warn the administrators about newly discovered software vulnerabilities. It has been developed as API to provide easy integration. In general it is an automation of Active Reconnaissance Phase. That's why, it can be used as an automated API-based port and vulnerability scanner.

Mainly it is expected to close the huge gap by automating the network scanning and vulnerability assessment processes for small and large networks and the lack of the available methods. It will play a big role in protecting network and web application against the possible attacks. It will prevent the leak of confidential data. By using one automated tool, It will solve the loss of the critical information we can gather from the connections among used technologies. And it will allow tester/administrators to scan systems against the attacks in short time. As it is an API server, It will be a solution that can easily be integrated with the current systems to solve the difficulties faced while switching from one tool to another to complete the process of scanning. At the same time, it gives the opportunity for administrators and researchers to prove that a host is vulnerable to certain attacks or not by automated periodic scans.

The method has been proved by the various test cases applied considering different scenarios from the real world. The results of the test cases were satisfying and beyond our expectations. The outcomes were very successful in comparison to a more manual technique. We were able to gather port and vulnerability information in a very short time with high accuracy. The average time of scanning a server and detecting the vulnerabilities is 2.2 minutes. Regardless of the number of vulnerabilities, the increase in time for each open port is just about 12 seconds (manual process takes weeks and almost 1 minute per vulnerability). Most of the advantages has been explained in the previous parts. One of the unique elements of it is being one the first comprehensive automated toots in this limited area and the high performance of it.

### List and Explanation of Figures

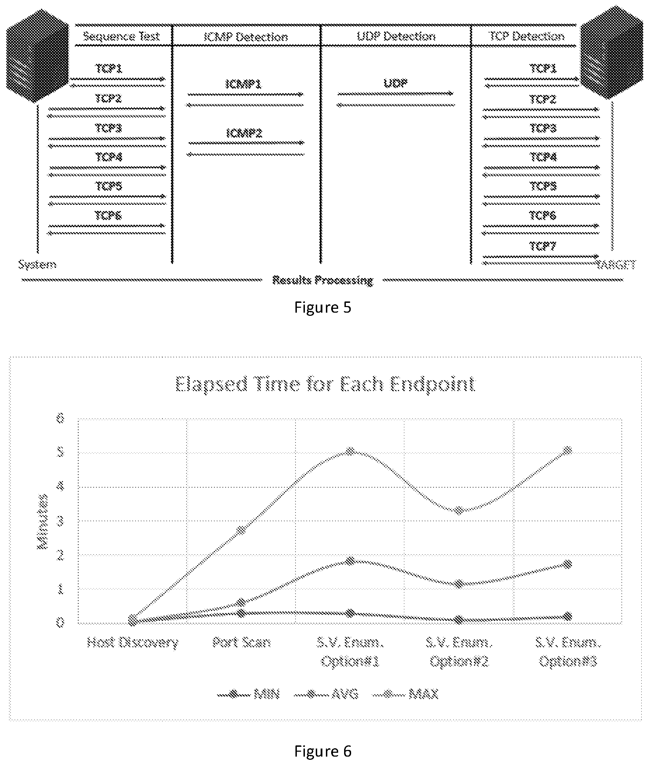

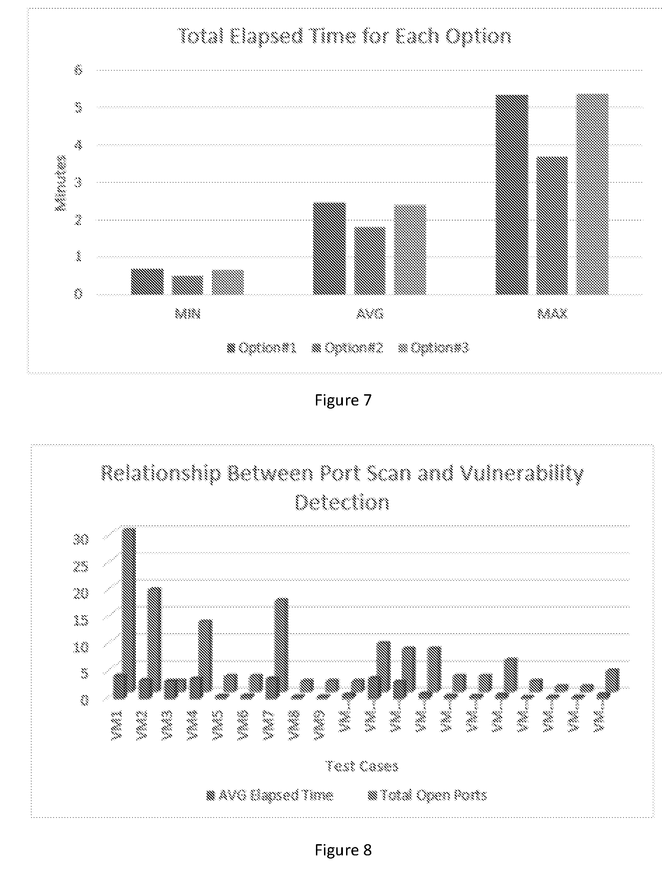

Figure 1: Schematic representation of RESTful API (REpresentational State Transfer Application Programming Interface) architecture
   101: Get/Post
   102: JSON/XML
   103: Data
   104: Protocol
   105: Domain Name
   106: Path
   107: End-point
   108: Rest API
Figure 2: Schematic representation of the general structure of the method according to present invention
   201: User
   202: Post
   203: JSON
   A: Main endpoint
   204: Scan
   B: Endpoint
   205: Host Discovery
   206: Port Scanner
   207: Service and Version Enumerator
   208: Operating System detection
   209: Vulnerability detection
   C: Service
   210: Target
Figure 3: Schematic representation of host discovery methods
   301: ARP detection
   302: No Ping Scan
   303: Other Detection Methods
   304: System
   305: ARP Request
   306: No packets
   307: ICMP Echo Request
   308: TCP SYN Request
   309: TCP SCK Request
   310: ICMP timestamp request
   210: Target
Figure 4: Schematic representation of port scan methods
   304: System
   210: Target
   401: TCP SYN Scan
   402: UDP Scan
   403: Other Scan Methods
   404: Port Open
   405: Port Closed
   406: TCP SYN
   407: TCP SYN SCK
   408: TCP RST
   409: UDP Req
   410: UDP Res
   411: TCP Connect Scan, SCTP INIT Scan, TCP NULL, PIN, Xmas Scans, TCP ACK Scan, TCP Window Scan, TCP Maimon Scan, Custom TCP Scan, SCTP COOKIE ECHO Scan, IDLE Scan, IP Protocol Scan, FTP Bounce Scan
Figure 5: Schematic representation of OS Detection
   501: Sequence Test
   502: ICMP Detection
   503: UDP Detection
   504: TCP Detection
   505: TCP1
   506: TCP2
   507: TCP3
   508: TCP4
   509: TCP5
   510: TCP6
   511: TCP7
   512: ICMP1
   513: ICMP2
   514: UDP
   515: Results Processing
Figure 6: Graph showing the time elapsed for each process (endpoint) and the total time
   601: Minutes
   205: Host Discovery
   206: Port Scanner
   602: Service and Version Enumerator option 1
   603: Service and Version Enumerator option 2
   604: Service and Version Enumerator option 3
   605: Minimum
   606: Average
   607: Maximum
Figure 7: Graph showing total time elapsed for each option
   601: Minutes
   602: Service and Version Enumerator option 1
   603: Service and Version Enumerator option 2
   604: Service and Version Enumerator option 3
   605: Minimum
   606: Average
   607: Maximum

### Detailed Description of the Invention

In this invention, we provide an API-based automated network scanner including open port scanner and service-version enumerator and vulnerability assessment application using the Network Mapper (Nmap) Scripting Engine (NSE) integrated with VulScan and Nmap-vulners modules databases to find Common Vulnerabilities and Exposures (CVE). Vulners is an NSE script that makes use of publicly available services to provide relevant information about security vulnerabilities.

In this work, we have proposed a solution that can easily be integrated with the current systems to solve the difficulties faced while switching from one tool to another to complete the process of scanning as the first feature of an automated security engine. The primary goal is to close the gap by automating the network scanning and vulnerability assessment processes for small and large networks. At the same time, it gives the opportunity for administrators and researchers to prove that a host is vulnerable to certain attacks or not by automated periodic scans.

The essential components used to implement the invention will now be explained, along with the methodological approach in terms of the general structure.

*Python Programming Language* (also known as Python) is a high-level programming language with a design philosophy that prioritizes readability. Its features and object-oriented approach are designed to help programmers write clean code for both small and large-scale projects. Besides, it's a beneficial language for cybersecurity since it is capable of doing a wide variety of cybersecurity tasks, such as malware analysis, scanning, and penetration testing. Those are some of the reasons why we have decided to write our project with it.

Nmap (Network Mapper) is an open-source network scanning and discovery tool widely used for scanning the state of a target host, and it provides comprehensive scan types and firewall evasion methods. Each technique can be customized and made to be as noticeable or as inconspicuous as possible. It can be used to find open ports, communication protocols (TCP/UDP), services and versions used on each port, as well as vulnerabilities on a remote device. The data acquired can be used to improve the system in terms of preventing future attacks. Our schema relies on Nmap algorithms to gather the required information regarding the target.

One of Nmap's most vital and flexible features is the Nmap Scripting Engine (NSE). It allows users to build simple scripts to automate a wide range of networking functions using a programming language called Lua. Those scripts are run in parallel, with the speed and efficiency that Nmap is customized for. Users can use the built-in scripts of Nmap's library or develop their own to fulfill their specific needs. NSE's key tasks include network discovery, more sophisticated version detection, vulnerability detection, and backdoor detection. It can even be used for vulnerability exploitation.

Flask is a Python-based micro-framework as it does not necessitate the usage of any specific tools or libraries. It doesn't have a database abstraction layer, form validation, or any other components that rely on third-party libraries to do typical tasks. When it comes to designing web applications, Flask gives developers a lot of options. It includes tools, libraries, and mechanisms that allow you to build a web application, but it doesn't impose any dependencies or tell the user how the project should look.

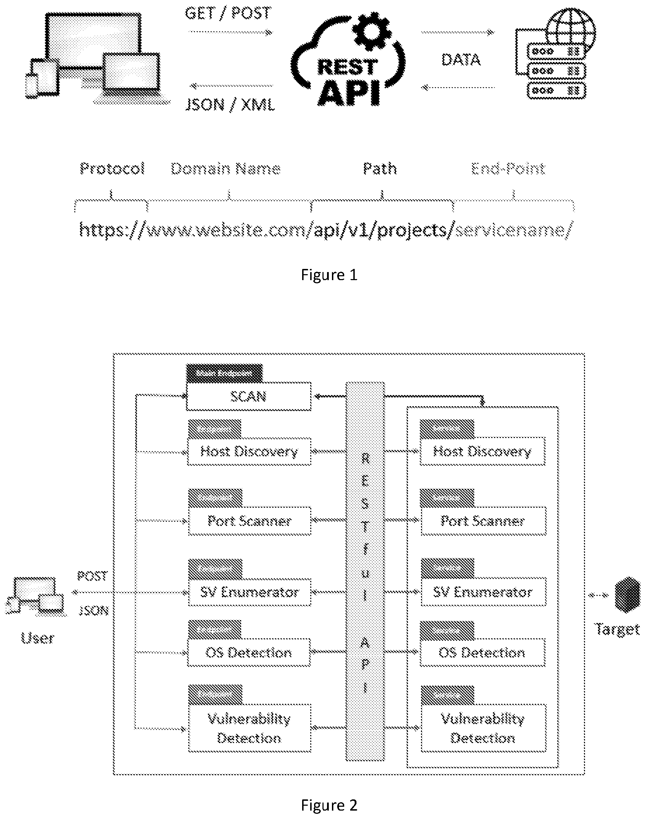

REpresentational State Transfer is a software architectural style that was developed to help in the design and development of the WWW's architecture. REST establishes a set of guidelines for how an Internet-scale distributed hypermedia system, such as the Web, should be designed. As shown in Fig. 1, REST APIs offer a lot of flexibility, which is one of its biggest benefits. REST can accommodate many sorts of calls, return diverse data formats, and even change fundamentally with the correct implementation of hypermedia because data is not linked to resources or functions. Data and functionality are considered resources in the REST architectural style, and they are accessible via Uniform Resource Identifiers (URIs). The most often used protocol is HTTP. Using such an architecture, making projects more appropriate for scaling up and integrate it with other systems. All of these characteristics contribute to the simplicity, lightness, and speed of RESTful applications.

In a preferred embodiment, the method of the invention has been implemented in the Python 3.9 pro- gramming language and the Flask Micro Web-Framework as a RESTful-API Server based on Network Mapper (Nmap) algorithms. This approach gives the chance to integrate the project with any system. One main endpoint requiring only an IP input to go over the whole process in an automated approach (a) has been provided, starting with the host discovery (b), port scanning (c), service-version enumeration (d), and ending with vulnerability detection (f). The detailed result of the scan will be preferably presented as JSON, XML or TXT output. Each function of the active reconnaissance process has been implemented as a separate endpoint as shown in Fig.2 to increase the accuracy and optimize the scheme. Additionally, it allows advanced users to enter their own customized parameters that might be needed. Each function has been explained in the following subsections.

### B: Host Discovery

Host discovery is the first endpoint in our system. "<server-ip>/api/v1/host-check". At this point, the given IP's (target system) status will be checked if it is active or not and the result will be as "Up" or "Down". Accordingly, the system will process to the next step (port scan endpoint) automatically. If the result is down then it will go directly to the final step without wasting time with the other scanning methods.

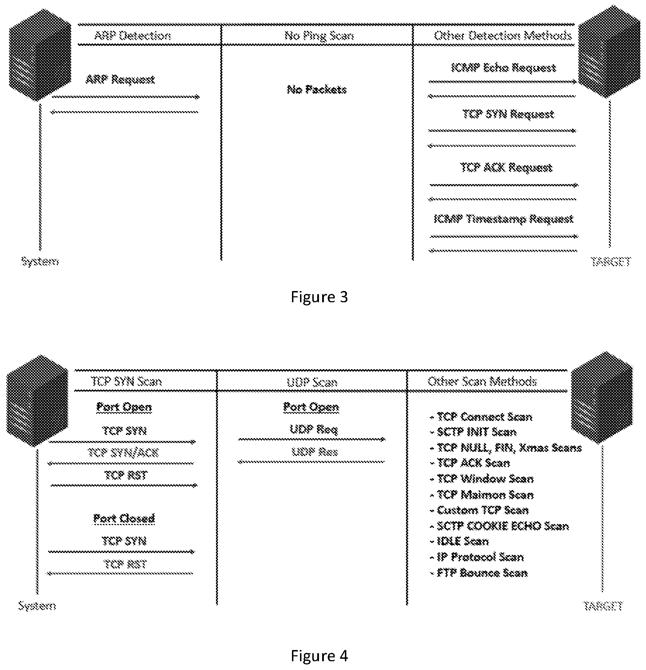

There are three primary host discovery detection methods as demonstrated in Fig.3. The first one is ARP detection, which in turn broadcasts ARP query packets throughout the LAN. Using a list scan rather than a PING scan by setting the target host's state to "HOST UP" is the second one. The other detection methods include sending four different types of data packets to determine whether the target host is online; An ICMP timestamp request, an ICMP echo request, a TCP SYN packet to port 443, a TCP ACK packet to port 80, and a TCP SYN packet to port 443.

### C. Port Scanning

Port scanning "<server-ip>/api/v1/port-scan" is the schema's second endpoint. By default, the system will start scanning the most known 1000 TCP port, unless the user changes the POST request to scan a specific port range with the demanded network protocol, such as TCP, UDP, or both together. Open ports and the related protocol results will be stored temporarily on the server to be prepared and sent to the next endpoint, which is the service and version enumeration step. In the case of having no open ports detected, the system will terminate the process and show the results.

The goal of a port scan is to determine the target port's operational condition by returning the packet's characteristics. Different probe packets are created for different scan types. Nmap first runs a PING probe operation and transmits the necessary probe packets to the target machine's specified port, as shown in Fig.4. Then it either waits for the probe packet to be re-transmitted or sends a fresh probe packet. Finally, it is dependent on several detection mechanisms and waits for various types of response packets.

### D. Service and Version Enumeration

At this endpoint "<server-ip>/api/v1/sv-scan", the system enumerates only the banners of the services on the open ports, then the version of each one. This part is the most vital one, as in the next step we are going to detect the related vulnerabilities. Open ports and the related protocol results will be stored temporarily on the server to be prepared and sent to the next endpoint, which is the service and version enumeration step. In the case of having no open port detected, the system will terminate the process and show the results.

The premise behind this form of scanning is to match the scan findings to the database's service fingerprint or service signature. Thousands of common service fingerprints or sig- nature traits are integrated into the Nmap database. The target system will generate and return the necessary information, which can match the port's service and service version, in response to a request for a specific target port.

### E. OS Detection

To increase the accuracy of the results, we have com- bined the operating system detection with the previous SV Enumeration endpoint. To identify the operating system, the system uses TCP/IP protocol stack fingerprints. Because there are no mandatory specifications for TCP/IP implementation in some areas in the RFC specification, distinct TCP/IP schemes may have their own unique processing mechanisms. The differences in these characteristics are what Nmap uses to determine the type of operating system. Initially, Nmap runs a sequence generation test, sending six TCP probing packets, and extracting the data fingerprint SEQ/OPS/WIN/T1. It then selects a closed UDP port, a closed TCP port, and an open TCP port for complete TCP/UDP/ICMP detection and fingerprint data extraction, respectively. Finally, it compares the fingerprint attributes of known systems included with Nmap to the findings of the detection.

### F. Vulnerability Detection

Detecting common vulnerabilities and exposures (CVE) and the possible threats are done at this endpoint via the Nmap Scripting Engine (NSE), and at the end, it returns the final results of the scan. It is divided into three main functions;
- Vulscan: Vulscan is a module that extends Nmap's ability to scan for network vulnerabilities. This is an NSE script that assists in the discovery of vulnerabilities on a single target or a network. This script focuses on service and version detection in order to determine the severity of vulnerabilities on the target computer or network. The module uses the most famous databases of vulnerabil- ity which includes all the officially announced security issues. The pre-installed databases are
- scipvuldb.csv - https://vuldb.com
- cve.csv - https://cve.mitre.org
- securityfocus.csv - www.securityfocus.com/bid
- xforce.csv - https://exchange.xforce.ibmcloud.com/
- expliotdb.csv - https://www.exploit-db.com
- openvas.csv - http://www.openvas.org
- securitytracker.csv - https://www.securitytracker.com
- osvdb.csv - http://www.osvdb.org
   - Vulners: Vulners is another NSE script that makes use of publicly available services to offer pertinent information about vulnerabilities with more than more than 250GB database size. It is integrated with the nmap libraries in order to improve Nmap's ability to scan for network vulnerabilities.
   - Comprehensive: Comprehensive mode makes use of both modules together to detect the highest number possible of vulnerabilities. It checks the results of their return in accordance with their priority in order without any repetitions.

In an aspect present invention relates to an API-based automated network scanner method comprising an optimized host discovery and open port scanner and service-version enumerator and vulnerability assessment application using the Network Mapper (Nmap) and Scripting Engine (NSE) integrated with enhanced VulScan and Vulners modules and their databases with enhancement and optimization rules to find Common Vulnerabilities and Exposures (CVE) and possible security issues and threats to provide a detailed report about the results, wherein said method comprises the steps of;
a) Dealing with input request
b) Carrying out the host discovery
c) Carrying out port scanning
d) Enumeration of service and version
e) Detecting Operating System
f) Detecting common vulnerabilities and exposures (CVE) and the possible threats via the Nmap Scripting Engine (NSE),
g) Providing a detailed report in an accetable format such as JSON, XML or TXT

In an aspect of the invention host discovery (b) is carried out with one of the methods selected from (i) the group comprising ARP detection, (ii) Using a list scan rather than a PING scan by setting the target host's state to "HOST UP" and (iii) sending four different types of data packets to determine whether the target host is online.

### Examples:

Various scenarios based on real-world events have been used to evaluate the scheme's performance. We have tested the project in 20 distinct environments, which include most of the possible structures. The test cases are;

Metasploitable-2: is a deliberately vulnerable Linux virtual server meant for target practice, training, and exploit testing. Metasploitable2, unlike other vulnerable virtual machines, focuses on operating system and network services layer vulnerabilities rather than custom, vulnerable programs. In terms of vulnerabilities that might be uncovered in a production setting, it has a very similar scenario.

Bee-box-v1.6: bee-box is a modified Linux Virtual Machine that comes with a buggy web application pre-installed (bWAPP). It gives the chance to investigate almost all vulnerabilities in web applications. bWAPP is a purposefully unsafe web application that is free and open source. It assists web security enthusiasts, developers, and students in identifying and preventing web vulnerabilities. It can also be beneficial to prepare for effective penetration testing and ethical hacking tasks. The fact that bWAPP has over 100 online vulnerabilities is what sets it apart. It covers all significant known web flaws, as well as all OWASP Top 10 project vulnerabilities. bWAPP is a MySQL database-driven PHP application.

Metasploitable-1: The Metasploit project is a computer security project helping with penetration testing and IDS signature development by providing knowledge about security flaws. This is the initial version of metasploitable, which is based on an Ubuntu 8.04 server that has been customized. Tomcat 5.5 (with weak credentials), distcc, tikiwiki, twiki, and an earlier mysql are among the insecure programs provided. As previously stated, it is a purposely vulnerable virtual system intended for target practice, training, and exploit testing. It focuses on operating system and network services layer vulnerabilities.

BTRsys1 and BTRSys2.1: BTRsys project contains intermediate-level boot-to-root susceptible images, with the primary goal of gaining shell access by attacking vulnerable services on the machine, which is a distinct scenario from the real-world probable risks.

g0rmint: This buggy machine is totally based on a real-world scenario that has been encountered while performing testing for a client's website. It is one of the advanced scenarios in obtaining a limited shell.

Hades-v1.0.1: Hades is yet another boot2root challenge designed mainly for experienced researchers. Reverse engineering, sploit creation, and a thorough understanding of computer architecture will all be required to exploit this machine successfully. The goal of it is to gradually get more access to the box until the root account is reached.

vulnVoIP: VulnVoIP is built on the AsteriskNOW distribution, which has some flaws in it. The goal is to track down VoIP users, crack their passwords, and acquire access to the support account voicemail message system. To add a little spice to the mix, this specific distribution is also vulnerable to a well-known exploit that makes it simple to obtain access to the system's root shell. It is one of the few real-life VoIP test environments available.

VPLE: The Vulnerable Pentesting Lab Environment (VPLE) is a Linux virtual system that is designed to be purposefully vulnerable. This virtual machine can be used for education, tool testing, and standard penetration testing labs. VPLE includes Web-dvwa, Mutillidae, Webgoat, Bwapp, Juice-shop, Security-ninjas, and a Wordpress environment.

Troll2: The Tr011 machine has been designed to look and act similarly to the Offensive Security Certified Professional (OSCP) system, and it is prepared to troll the penetration tester at some points. Troll2 is a level of difficulty that is higher than the previous level, Troll1. This is a scenario of intermediate difficulty.

sick0s1.1: This server provides a clear example of how hacking tactics can be used to infiltrate a network in a secure setting. This virtual computer is comparable to the ones used in the Offensive Security Certified Professional labs (OSCP). The goal is to get into the network/machine and gain administrative/root access to it.

MorningCatch: Morning Catch is a VMware virtual machine that demonstrates targeted client-side attacks and post-exploitation, akin to Metasploitable. A website for a bogus seafood firm, a self-contained email infrastructure, and vulnerable Linux and Windows client-side desktop environments can all be found on this virtual server. It also uses WINE to run a few weak Windows apps.

NETinVM UML 2016: NETinVM is a VMware virtual machine image that exposes a full computer network to the user. As a result, NETinVM can be used to learn about operating systems, computer networks, and security for systems and networks. Furthermore, NETinVM is a VMware virtual machine image that provides a set of User-mode Linux (UML) virtual machines that are ready to use. When the UML virtual machines are started, they build a whole computer network. The Linux operating system is used by all of the virtual computers. It is a full system that displays a real-world network.

hackxor1: is a webapp testing environment where vulnerabilities must be located and exploited to progress through the system. similar to WebGoat, however, with a focus on realism and challenge. XSS, CSRF, SQLi, ReDoS, DOR, command injection, and other exploits are included. Client attack simulation using HtmlUnit, and realistic vulnerabilities modeled by Google, Mozilla, and other platforms are just a few of the features available

Brainpan2, CySCA2014InABox, DonkeyDocker- v1.0, GoatseLinux-1.0-VM, UltimateLAMP-0.2 and w1r3s.v1.0.1: These machines are also designed to have different schemes from real-life ones to practice and test the new penetration testing tools being developed. These vulnerable servers are based on real-world scenarios and similar to OSCP labs.

In each of these test cases, we have tested the automation of active reconnaissance in this project, starting with host discovery, port scanning, service-version enumeration, and finalizing with the vulnerability detection option#1/#2/#3. Option one enumerates the services working on the opened ports, the versions of each service, and then detects the vulnerabilities based on the "VulScan" script. Option two goes over the same process depending on the "Vulners" script. In the last one (option3), it checks the system with the help of both of the scripts together. In table I, we can see the time elapsed in minutes for each step of the process for each test case. And the second table (Table II) shows the total time elapsed in minutes for the whole process with the used vulnerability detection option for each test case.

**TABLE 1**

| **Virtual Machine Name** | **Time Elapsed in Minutes** | | | | | **Results** | | | | |
|---|---|---|---|---|---|---|---|---|---|---|
| | **Host Discovery** | **Port Scan** | **S.V. Enum. Option#1** | **S.V. Enum. Option#2** | **S.V. Enum. Option#3** | **Total Open Ports** | **S.V. Enum. Option#1*** | **S.V. Enum. Option#2*** | **S.V. Enum. Option#3*** | **OS Detection Accuracy** |
| Metasploitable2 | 0.025 | 0.316 | 5.020 | 2.718 | 5.051 | 30 | 41692 | 417 | 42109 | 100 |
| Bee-box_v1.6 | 0.025 | 0.325 | 3.835 | 2.444 | 3.877 | 19 | 3405 | 544 | 3949 | 100 |
| Brainpan2 | 0.025 | 0.287 | 3.183 | 3.192 | 3.191 | 2 | 6 | 9 | 15 | 100 |
| Metasploitable1 | 0.025 | 0.403 | 4.127 | 2.720 | 4.143 | 13 | 19794 | 403 | 20197 | 100 |
| BTRsys1 | 0.023 | 0.357 | 0.487 | 0.358 | 0.526 | 3 | 594 | 130 | 724 | 100 |
| BTRSys2.1 | 0.115 | 0.407 | 0.596 | 0.281 | 0.625 | 3 | 606 | 199 | 805 | 100 |
| CySCA2014InABox | 0.117 | 0.490 | 3.98 | 2.882 | 4.194 | 17 | 52011 | 395 | 52406 | 100 |
| DonkeyDocker_v1.0 | 0.026 | 0.336 | 0.397 | 0.183 | 0.391 | 2 | 500 | 150 | 650 | 100 |
| g0rmint | 0.025 | 0.302 | 0.385 | 0.192 | 0.414 | 2 | 542 | 199 | 741 | 100 |
| Hades_v1.0.1 | 0.023 | 0.481 | 1.872 | 0.079 | 0.180 | 2 | 370 | 27 | 397 | 100 |
| GoatseLinux_1.0 | 0.025 | 0.359 | 3.977 | 3.309 | 3.994 | 9 | 5325 | 228 | 5553 | 100 |
| vulnVoIP | 0.024 | 0.398 | 3.239 | 2.708 | 3.244 | 8 | 4329 | 110 | 4439 | 100 |
| VPLE | 0.029 | 0.347 | 1.212 | 0.291 | 1.081 | 8 | 1249 | 245 | 1494 | 100 |
| Tr0112 | 0.026 | 0.384 | 0.559 | 0.259 | 0.599 | 3 | 373 | 23 | 396 | 100 |
| sick0s1.1 | 0.039 | 1.885 | 0.489 | 0.292 | 0.531 | 3 | 399 | 33 | 432 | 100 |
| MorningCatch | 0.121 | 0.593 | 0.867 | 0.235 | 0.883 | 6 | 1524 | 34 | 1558 | 100 |
| NETinVM 2016 | 0.081 | 0.304 | 0.306 | 0.179 | 0.267 | 2 | 0 | 0 | 0 | 100 |
| hackxor1 | 0.038 | 2.714 | 0.311 | 0.183 | 0.386 | 1 | 587 | 0 | 587 | 100 |
| UltimateLAMP-0.2 | 0.037 | 0.370 | 0.276 | 0.287 | 0.304 | 1 | 35 | 31 | 66 | 100 |
| w1r3s.v1.0.1 | 0.130 | 1.065 | 0.991 | 0.406 | 0.890 | 4 | 3450 | 62 | 3512 | 100 |
| **MIN** | **0.023** | **0.287** | **0.276** | **0.079** | **0.180** | **1** | **0** | **0** | **0** | **100** |
| **AVG** | **0.049** | **0.606** | **1.806** | **1.160** | **1.738** | **7** | **6840** | **162** | **7002** | **100** |
| **MAX** | **0.130** | **2.714** | **5.020** | **3.309** | **5.051** | **30** | **52011** | **544** | **52406** | **100** |

### RESULTS or TEST CASES

**TABLE II**

| **Virtual Machine Name** | **Total Time Option#1** | **Total Time Option#2** | **Total Time Option#3** |
|---|---|---|---|
| Metasploitable2 | 5.362 | 3.060 | 5.393 |
| Bee-box_v1.6 | 4.185 | 2.794 | 4.227 |
| Brainpan2 | 3.495 | 3.504 | 3.503 |
| Metasploitable1 | 4.554 | 3.147 | 4.570 |
| BTRsys1 | 0.868 | 0.738 | 0.906 |
| BTRSys2.1 | 1.117 | 0.802 | 1.146 |
| CySCA2014InABox | 4,592 | 3.489 | 4.801 |
| DonkeyDocker_v1.0 | 0.759 | 0.545 | 0.753 |
| g0rmint | 0.712 | 0.518 | 0.740 |
| Hades_v1.0.1 | 2.377 | 0.583 | 0.685 |
| GoatseLinux_1.0_VM | 4.360 | 3.692 | 4.377 |
| vulnVoIP | 3.662 | 3.131 | 3.667 |
| VPLE | 1.588 | 0.666 | 1.457 |
| Tr0112 | 0.969 | 0.669 | 1.010 |
| sickDs1.1 | 2.414 | 2.216 | 2.455 |
| MorningCatch | 1.581 | 0.948 | 1.597 |
| NETinVM UML 2016 | 0.691 | 0.564 | 0.652 |
| hackxor1 | 3.063 | 2.935 | 3.138 |
| UltimateLAMP-0.2 | 0.683 | 0.694 | 0.711 |
| w1r3s.v1.0.1 | 2.186 | 1.601 | 2.084 |
| **MIN** | **0.683** | **0.518** | **0.652** |
| **AVG** | **2.461** | **1.815** | **2.394** |
| **MAX** | **5.362** | **3.692** | **5.393** |

### TOTAL ELAPSED TIME IN MINUTES

The evaluation process over numerous test environments outlined in the preceding section demonstrates the project's stability and high performance. Users can check the status of the host (up/down), examine the open ports, find the exposed service and version information, and finally investigate all possible risks, threats, and vulnerabilities in an automated manner using three different detection functions provided as quick, detailed, and comprehensive. The minimum, average, and maximum values of the time elapsed for each endpoint test case are shown in Fig.6.

In our approach, the quick version relies on the Nmap Scripting Engine's Vulners module, which provides the common vulnerabilities and exposures reference numbers related to the enumerated service and version information, as well as the exploit priority. The detailed option is based on the VulScan script, which gives a significantly longer list that includes not only the CVE reference number but also additional potential risks classified by various types of reference numbers. As we mentioned in the methods section, this module is integrated with the world's most well-known eight vulnerability databases, which cover nearly every possible risk related to the organization's technology. The final comprehensive method combines both scripts and returns the unique findings. Figure 7 shows the high performance of each strategy.

The relationship between the total open port number and the total elapsed time for the enumeration and detection operation is shown in Fig.8. As it can be expected, the time increases as the total number of open ports grows. However, the increment in time is only about 12 seconds for each port regardless of the number of vulnerabilities. Castiglione et al. [36] indicated that performing a manual approach would take one minute per vulnerability. For example, our system was able to detect 42109 vulnerabilities only in five minutes for Metasploitable2 environment. The best case in the increment ratio was 6 seconds and the worst case was 1.5 minute in the test cases. This emphasises the stability and proves the efficiency of the suggested schema in terms of its high processing speed

Last but not least, the suggested technique will play an important role in system security by allowing companies and system administrators to scan their systems on a frequent and regular basis with the minimal resources they have. Furthermore, this allows for rapid updates to newly discovered software vulnerabilities. Our scanner is used to demonstrate how simple it is to scan a complicated enterprise-grade web application. Attempting to enumerate the service-version and vulnerability information from all ports without making any optimization rule to enhance the performance of the operation is the most common mistake made by other researchers.

As mentioned above, the aim of this invention is to provide a generic and optimized approach for automating the process using the available and dynamic vulnerability and exposure datasets. We've made it apparent that our technique is primarily focused on automating the port scanning and vulnerability assessment phases of reconnaissance, which are handled by Nmap's algorithms, Nmap Scripting Engines (NSEs) and Vulscan and Vulners modules.

All in all, we offer a useful schema for the active information-gathering phase, which penetration testers and system administrators can use during penetration testing. The project includes an automated API-based IP and port scanner, a service-version enumerator, and a vulnerability detection system. In this system, the Network Mapper (Nmap) is used to collect information with high accuracy using the criteria in our schema. Furthermore, the work has been implemented as a RESTful-API server with the purpose of easy integration for real-world scenarios, allowing administrators to scan and secure their networks more quickly while also being entirely scalable and flexible to their demands and growth.

Furthermore, the results of the test cases were satisfying and beyond our expectations. We almost covered all the possible basic environments based on real-life scenarios. The outcomes were very different in comparison to a more manual technique. We were able to gather port and vulnerability information in a very short time with high accuracy.

## Claims

1. An application programming interface, API, based automated network scanner method comprising:
checking, by a host discovery service a status of a target system based on an internet Protocol, IP, address of the target system if the status of the target system is down then terminating the method and otherwise if the status of the target system is up determining by a port scanner service an operational condition of a target port of the target system to identify open ports and related protocol results; if no open ports are detected, terminating the process and showing the results; and otherwise if open ports are detected, matching by a service-version enumerator service, open port scan findings to a service fingerprint or a service signature in a database and finding by a vulnerability detection service Common Vulnerabilities and Exposures, CVE, security issues and threats; wherein the vulnerability detection service uses a network mapper, Nmap, and scripting engine, NSE, integrated with an enhanced VulScan module and a vulners module and their databases with enhancement and optimization rules; providing a detailed report about results of the CVEs the security issues and threats wherein the method is implemented in the Python 3.9 programming language and the Flask Micro Web-Framework as a RESTful, API server based on Nmap algorithms.

2. The method according to claim 1, wherein the format of the report is one of java script object notation, JSON, extensible markup language, XML, or text file, TXT; and wherein the method further comprises, detecting, by an operating system, OS, detection service, an OS of the target system.

3. The method according to claim 2 wherein checking, by a host discovery service, a status of a target system based on internet protocol, IP, address of the target system is carried out with one of the methods selected from the group comprising (i) address resolution protocol, ARP, detection, (ii) Using a list scan rather than a PING scan by setting a target host's state to "HOST UP" and (iii) sending four different types of data packets to determine whether the target host is online.

4. The method according to claim 3 wherein the four different types of data packets are an internet control message protocol, ICMP, Echo request, a transmission control protocol, TCP, Syn request, a TCP Ack Request, an ICMP Timestamp request.

5. The method according to any one of claims 2-4 wherein detecting the operating system comprises; (i) the Nmap running a sequence generation test, sending six TCP probing packets, and extracting a data fingerprint TCP sequence, SEQ/TCP options, OPS/TCP winfow size WIN/ response to firsl TCP probe test of Nmap, T1, (ii) the Nmap selects a closed, user datagram protocol, UDP, port, a closed TCP port, and an open TCP port for complete TCP/UDP/ICMP detection and fingerprint data extraction, and (iii) Nmap compares fingerprint attributes of known systems included with Nmap to findings of TCP/UDP/ICMP detection after data fingerprint extraction.

6. The method according to any one of claims 1-5 wherein the vulnerability detection service comprises a comprehensive mode that makes use of both Vulscan and Vulners scripts while finding CVEs, security issues and threats.

## Patentansprüche

1. Automatisiertes Netzwerk-Scanner-Verfahren auf Basis einer Anwendungsprogrammierschnittstelle, API, umfassend:
Überprüfung des Status eines Zielsystems durch einen Host-Ermittlungsdienst auf der Grundlage einer Internetprotokoll-, IP-, Adresse des Zielsystems; wenn der Status des Zielsystems inaktiv ist, wird das Verfahren beendet; ist der Status des Zielsystems hingegen aktiv, wird durch einen Port-Scanner-Dienst der Betriebszustand eines Zielports des Zielsystems ermittelt, um offene Ports und die zugehörigen Protokollergebnisse zu identifizieren; werden keine offenen Ports erkannt, wird der Vorgang beendet und die Ergebnisse angezeigt; und andernfalls, wenn offene Ports erkannt werden, Abgleich der Ergebnisse des Scans offener Ports mit einem Dienst-Fingerabdruck oder einer Dienst-Signatur in einer Datenbank durch einen Dienst- und Versionsaufzählungsdienst und Erkennung von allgemein bekannten Schwachstellen und Sicherheitslücken, CVE, Sicherheitsproblemen und Bedrohungen durch einen Dienst zur Erkennung von Schwachstellen; wobei der Dienst zur Erkennung von Schwachstellen einen Netzwerk-Mapper, Nmap, und eine Skript-Engine, NSE, verwendet, die mit einem erweiterten VulScan-Modul und einem Vulners-Modul sowie deren Datenbanken mit Erweiterungs- und Optimierungsregeln integriert sind; Bereitstellung eines detaillierten Berichts über die Ergebnisse der CVEs, der Sicherheitsprobleme und der Bedrohungen, wobei das Verfahren in der Programmiersprache Python 3.9 und dem Flask Micro Web-Framework als RESTful-API-Server auf der Grundlage von Nmap-Algorithmen implementiert ist.

2. Verfahren nach Anspruch 1, wobei das Format des Berichts JavaScript Object Notation, JSON, Extensible Markup Language, XML, oder eine Textdatei, TXT, ist; und wobei das Verfahren ferner das Erkennen durch ein Betriebssystem, OS, Erkennungsdienst, eine OS des Zielsystems, umfasst.

3. Verfahren nach Anspruch 2, wobei das Überprüfen eines Status eines Zielsystems, das auf dem Internetprotokoll, IP, basiert, durch einen Host-Ermittlungsdienst erfolgt, wobei die Adressierung des Zielsystems unter Verwendung eines Verfahrens durchgeführt wird, das aus der Gruppe ausgewählt ist, die Folgendes umfasst: (i) Erkennung des Adressauflösungsprotokolls, ARP, (ii) die Verwendung eines Listen-Scans anstelle eines PING-Scans, indem der Status eines Zielhosts auf "HOST UP" gesetzt wird, und (iii) das Senden von vier verschiedenen Arten von Datenpaketen, um festzustellen, ob der Zielhost online ist.

4. Verfahren nach Anspruch 3, wobei es sich bei den vier verschiedenen Arten von Datenpaketen um eine Internet Control Message-Protokoll, ICMP, Echo-Anfrage, ein Übertragungssteuerungsprotokoll, TCP, Syn-Anfrage, eine TCP-Ack-Anfrage, eine ICMP-Zeitstempel-Anfrage handelt.

5. Verfahren nach einem der Ansprüche 2-4, wobei das Erkennen des Betriebssystems Folgendes umfasst: (i) Nmap führt einen Sequenzerzeugungstest durch, sendet sechs TCP-Prüfpakete und extrahiert einen Daten-Fingerabdruck-TCP-Sequenz, SEQ/TCP-Optionen, OPS/TCP-Fenstergröße WIN/Antwort auf den ersten TCP-Prüftest von Nmap, T1, (ii) Nmap wählt einen geschlossenen Port des Benutzer-Datagramm-Protokolls, UDP, einen geschlossenen TCP-Port und einen offenen TCP-Port für die vollständige TCP/UDP/ICMP-Erkennung und die Extraktion von Fingerabdruckdaten aus und (iii) Nmap vergleicht Fingerabdruckattribute bekannter Systeme, die in Nmap enthalten sind, mit den Ergebnissen der TCP/UDP/ICMP-Erkennung nach der Extraktion der Fingerabdruckdaten.

6. Verfahren nach einem der Ansprüche 1-5, wobei der Schwachstellenerkennungsdienst einen umfassenden Modus umfasst, der sowohl Vulscan- als auch Vulners-Skripte verwendet, während CVEs, Sicherheitsprobleme und Bedrohungen ermittelt werden.

## Revendications

1. Procédé de scan automatisé de réseau basé sur une interface de programmation d'applications, API, comprenant :
vérification, par un service de découverte d'hôtes, de l'état d'un système cible basé sur l'adresse du protocole Internet, IP, du système cible ; si l'état du système cible est hors service, mettre fin au procédé et dans le cas contraire, si l'état du système cible est en service, déterminer, par un service de scan de ports, une condition opérationnelle d'un port cible du système cible afin d'identifier les ports ouverts et les résultats de protocole associés ; si aucun port ouvert n'est détecté, mettre fin au procédé et afficher les résultats ; et dans le cas contraire, si des ports ouverts sont détectés, mettre en correspondance, par un service d'énumération des versions de services, les résultats du scan des ports ouverts avec une empreinte de service ou une signature de service dans une base de données, et trouver, par un service de détection des vulnérabilités, Vulnérabilités et Expositions Communes, CVE, les problèmes de sécurité et les menaces ; dans lequel le service de détection des vulnérabilités utilise un mappeur réseau, Nmap, et un moteur de scripts, NSE, intégrés à un module VulScan amélioré et à un module vulners, ainsi qu'à leurs bases de données incluant des règles d'amélioration et d'optimisation ;
fournir un rapport détaillé sur les résultats des CVE, les problèmes de sécurité et les menaces, dans lequel le procédé est mis en œuvre dans le langage de programmation Python 3.9 et le Flask Micro Web-Framework en tant que serveur API RESTful basé sur les algorithmes Nmap.

2. Procédé selon la revendication 1, dans lequel le format du rapport est l'un des notations d'objet JavaScript, JSON, langage de balisage extensible, XML, ou fichier texte, TXT ; et dans lequel le procédé comprend en outre la détection, par un service de détection du système d'exploitation, OS, d'un OS du système cible.

3. Procédé selon la revendication 2, dans lequel la vérification, par un service de découverte d'hôtes, de l'état d'un système cible basé sur l'adresse du Protocole Interne, IP, du système cible est effectuée selon l'une des méthodes choisies parmi le groupe comprenant (i) la détection du protocole de résolution d'adresse, ARP, (ii) l'utilisation d'un balayage par liste plutôt que d'un balayage PING en réglant l'état de l'hôte cible à « HOTE EN SERVICE » et (iii) l'envoi de quatre types différents de paquets de données pour déterminer si l'hôte cible est en ligne.

4. Procédé selon la revendication 3, dans lequel les quatre types différentes de paquets de données sont un message du protocole de contrôle d'internet, ICMP, une requête Echo, un protocole de contrôle de transmission, TCP, une requête Syn, une Requête d'Accusé de Réception TCP et une requête d'Horodatage ICMP.

5. Procédé selon l'une quelconque des revendications 2-4, dans lequel la détection du système d'exploitation comprend (i) l'exécution par Nmap d'un test de génération de séquence, l'envoi de six paquets de sondage TCP et l'extraction d'une empreinte de données de séquence TCP, des options SEQ/TCP, OPS/TCP la taille de fenêtre WIN/ la réponse au premier test, T1 de sondage TCP de Nmap ; (ii) la sélection par Nmap d'un port du protocole de datagramme utilisateur, UDP, fermé, un port TCP fermé et un port TCP ouvert pour une détection complète TCP/UDP/ICMP et l'extraction des données d'empreinte, et (iii) la comparaison par Nmap des attributs d'empreinte des systèmes connus inclus dans Nmap avec les résultats de la détection TCP/UDP/ICMP après extraction des données d'empreinte.

6. Procédé selon l'une quelconque des revendications 1-5, dans lequel le service de détection des vulnérabilités comprend un mode complet qui utilise à la fois les scripts Vulscan et Vulners tout en identifiant les CVEs, les problèmes de sécurité et les menaces.
